(19) Europäisches Patentamt

European Patent Office

Office européen des brevets

(11) EP 0 872 449 A1

# EUROPEAN PATENT APPLICATION

(43) Date of publication:
21.10.1998 Bulletin 1998/43

(51) Int. Cl.$^6$: C01F 11/18, C04B 22/10

(21) Application number: 97830170.3

(22) Date of filing: 14.04.1997

(84) Designated Contracting States:
AT BE CH DE DK ES FI FR GB GR IE IT LI LU MC NL PT SE
Designated Extension States:
AL LT LV RO SI

(71) Applicant:
I.C.S. Industria Chimica Subalpina S.p.A.
20121 Milano (IT)

(72) Inventors:
• Cambria, Flavio
20122 Milano (IT)

• Pelucchi, Giorgio
20121 Milano (IT)
• Orlandi, Angelo
24032 Calolziocorte (Lecco) (IT)
• Porta, Jacopo
55046 Querceto (Lucca) (IT)

(74) Representative:
Ferreccio, Rinaldo et al
Jacobacci & Perani S.p.A.,
Via Visconti di Modrone 7
20122 Milano (IT)

(54) **A barium carbonate suspension for use in industrial processes**

(57) A barium carbonate suspension comprising barium carbonate with a particle size varying from about 0.25 microns to about 1.5 microns and xanthan gum, a method for its preparation and the use of the suspension in industrial processes which require the removal of water-soluble sulphates.

## Description

The present invention relates in general to stable and concentrated barium carbonate suspensions useful for removing water-soluble sulphates which are harmful in various industrial processes, and to a method of producing the suspensions.

Industrial processes which require the removal of water-soluble sulphates are, for example, the treatment of effluent water, chlorine/soda electrolytic processes and industrial processes relating to the manufacture of building materials.

In particular, it is known that industrial processes for producing building materials such as ceramics, bricks and tiles almost always involve the presence of water-soluble sulphates during the manufacture of these materials.

These sulphates tend to migrate towards the surface of the final product, forming efflorescence and foams, considerably reducing the quality of these products.

Barium carbonate has already been described as an effective agent for eliminating water-soluble sulphates from these manufacturing processes.

The sulphates are eliminated by precipitation in accordance with the following equation:

$$BaCO_3 + Na_2SO_4 \rightarrow BaSO_4\downarrow + Na_2CO_3$$

Moreover, it is also known that the reactivity of barium carbonate towards these sulphates is inversely proportional to the average size of the barium carbonate particles, as can be seen from Table 1 given below.

In order to eliminate the soluble sulphates from industrial processes for producing building materials, barium carbonate is therefore used in powder form.

However, this brings with it many problems and disadvantages which render its actual use in industry rather ineffective and expensive.

First of all, owing to its noxious nature, barium carbonate powder may raise environmental-health problems during handling.

Moreover, formulations containing barium carbonate having an average particle size of 1 micron or less tend to form aggregations which make these formulations difficult to meter, handle and preserve.

In fact, when aggregations are formed, the desired average particle size is not maintained and ever increasing quantities of the product are required to achieve the desired reactivity.

The use of barium carbonate in powder form is consequently difficult from an economic point of view.

It has also been found that, although "free-flowing" barium carbonate having a particle-size of from about 2 to 4 microns is easier to handle and meter, it is not economically advantageous because of its low reactivity (see Table 1).

In patents US 3,615,811 and US 4,226,635, it is attempted to solve the problems discussed above by means of a product in powder form comprising barium carbonate and a dispersant.

Although these products showed some improvements in comparison with the conventional, known formulations of barium carbonate in powder form, they did not solve the environmental-health problem.

Moreover, suspensions prepared from these products have low viscosity and settle rapidly forming a hard sediment.

Their use is consequently not very practical and economically disadvantageous.

There was therefore a need to provide an improved formulation of barium carbonate which could overcome at least some of the problems mentioned above in connection with the use of barium carbonate in powder form.

In patent US-A-3,322,683 it was attempted to offer a solution to the aforementioned problems by means of an aqueous dispersion of barium carbonate with an average particle size within the range of from 0.25 - 2.0 microns by the addition of conventional dispersants and/or protective colloids.

The barium carbonate dispersions discussed in the above-mentioned patent solve some of the problems which are encountered when barium carbonate is used in powder form since they have improved reactivity and ease of handling and metering.

However, the aforementioned formulations cannot be kept for many months whilst retaining the desired properties.

In fact, the barium carbonate dispersion described in the patent US-A-3,322,683 destabilizes when it is kept for more than one week without stirring.

This dispersion tends to collapse and to lose its fluid consistency, forming a hard sediment which is difficult to redisperse even after stirring.

Moreover, after redispersion, the particles no longer have the original dimensions, thus showing a drop in reactivity.

In the technical field of the industrial manufacture of ceramics and the like, the problem of producing a stable barium carbonate formulation which is suitable for eliminating water-soluble sulphates and can be kept for long periods of time, that is, for several weeks or months without losing the desired properties, particularly stability, reactivity and suitable fluidity, thus still remains unsolved.

This problem is solved, according to the present invention, by an aqueous barium carbonate suspension which comprises barium carbonate having an average particle size of from 0.25 microns to 1.5 microns and xanthan gum.

A conventional dispersant may also be added to the suspension.

The composition of the suspension according to the present invention comprises, in percentages by weight relative to the total weight of the suspension, from 35% to 85% of barium carbonate, from 0.01% to 1.0% of xanthan gum, and from 0 to 5.0% of at least one dispersant.

All of the percentages indicated in the present application are by weight relative to the total weight of the suspension unless otherwise specified.

The barium carbonate suspensions of the present invention preferably comprise from 70% to 80% of barium carbonate, from 0.01% to 0.2% of xanthan gum, and from 0.2% to 1% of at least one dispersant.

A suspension comprising 75% by weight of barium carbonate, 0.06% by weight of xanthan gum, and 0.5% by weight of at least one dispersant is particularly preferred.

The present invention is based on the surprising fact that the addition of xanthan gum to the suspensions of barium carbonate described herein increases the stability properties of the dispersion.

Xanthan gum is a polysaccharide with a high molecular weight and a branched structure produced by many species of *Xanthomonas* and known commercially by the trade mark Kelzan.

It is a protective colloid soluble in hot or cold water and its addition, even in very low concentrations (0.1-0.2%), to suspensions of barium carbonate renders the latter highly viscous and stable.

Viscous barium carbonate suspensions produced with xanthan gum are pseudo-plastic and show a high degree of stability with changes in temperature and after preservation for long periods of time of many months or more.

Dispersants suitable for inclusion in the barium carbonate suspension of the present invention are conventional dispersants, with a preference for those of an anionic, hydrophilic nature.

They may be selected from the group comprising ammonium or alkali-metal phosphates, including metaphosphates, pyrophosphates, polyphosphates and phosphites, ligninsulphonates, byproducts of paper manufacture containing lignin, anionic, cationic and non-ionic emulsifiers having a different degree of hydrophilicity, such as phosphates or sulphates, amines and amides, alcohols, and derivatives containing carboxylic, oxyalkylene, polyalcohol and polyalkylene groups.

The dispersants are preferably selected from the group comprising:

-   polyacrylate polymers or copolymers thereof having molecular weights of between 1,000 and 1,000,000;

-   derivatives of melamine with an anionic extender such as, for example, melamine-formaldehyde-bisulphite (Melment SKW);

-   polymetanaphthalenesulphonate in the form of the sodium salt or of its other salts such as those obtained by the neutralization of polynaphthalenesulphonic acid with ammonia or magnesium oxide.

A suspension comprising barium carbonate, xanthan gum, and polynaphthalenesulphonate as the dispersant, with percentages by weight which fall within the ranges mentioned above is particularly preferred.

The stable and highly effective barium carbonate suspensions described above can be prepared in accordance with the method described below.

Barium carbonate can be produced by the reaction of a soluble barium salt such as, for example, barium chloride, or of barium hydroxide, with carbon dioxide or an alkaline carbonate.

The barium carbonate precipitated as a result of the aforementioned reaction is then subjected to a filtration step in a continuous or discontinuous system to give a product in the form of a paste.

The discontinuous filtration systems considered in the present invention are, for example, centrifuging, bell filters, filter presses and strip presses.

Continuous systems such as rotary filters, continuous centrifuges, or flat strip filters are particularly preferred.

The product in paste form is then placed in a Cowless reactor and at least one dispersant and the xanthan gum are added thereto with stirring to produce a suspension of barium carbonate having an average particle diameter of from about 1.1 microns to 1.2 microns.

As indicated above, the dispersion obtained may be subjected to a further micronization step in a ball mill.

This additional step in the method of producing the suspensions of the present invention not only reduces the sizes of the particles of barium carbonate to less than 1 micron and substantially eliminates aggregations, but also reduces the time required to produce the final suspension of barium carbonate with the appropriate viscosity.

It has also been found that milling with a duration no greater than 15 minutes in the micro-ball mill produces particularly effective dispersions which cannot be produced by Cowless systems, even if stirring is continued for days.

Moreover, the present method eliminates the drying step used to prepare formulations containing barium carbonate in powder form since barium carbonate paste is used as the starting material.

The method according to the present invention thus achieves economic advantages and a saving in time.

A further advantage shown by the method of the present invention is a total absence of aggregations as a result of the use of the step of micronization in a ball mill, thus increasing the stability and hence the effectiveness of the final barium carbonate suspension.

Since the dispersion of barium carbonate according to the present invention has increased reactivity, smaller quantities of the product are required to achieve the desired result.

As mentioned above, the present invention originates from an observation that the use of xanthan gum as a protective colloid for the barium carbonate suspension unexpectedly improves the stability of the final dispersion.

It has been found that this improvement in stability is never achieved with the use of any other known protective colloid described in US-A-3,322,683, either taken alone or in combination with a conventional dispersant.

Moreover, the combination of xanthan gum and polynaphthalenesulphonate gives exceptionally good results when used within the ranges specified above, as will be demonstrated in the description below.

These and other advantages of the present invention will become clearer from the following non-limiting examples.

Example 1

2kg of barium carbonate in paste form with 20% moisture was dispersed in 100ml of water to which 12g of Disperbeton (polynaphthalenesulphonate) had been added, in a Cowless disperser having a peripheral velocity of 4.8 m/sec and a ratio of 3 between the reactor diameter and the rotor diameter, for 15 minutes.

A highly fluid dispersion was obtained, to which 1.6g of Kelzan (xanthan gum) was added.

Stirring continued for 40 minutes.

At the end of this period, 20ml of 1% Soibac (preservative) was added to the disperser.

The resulting suspension contained:

75% by weight of barium carbonate
0.075% by weight of xanthan gum
0.56% by weight of Disperbeton
and had the following characteristics:

| | |
|---|---|
| viscosity | 650 cps |
| density | 2.16 |
| average particle size | 1.1 microns |
| reactivity | 82% |

The reactivity of the barium carbonate was measured by the following method:

500ml of a neutral 10% sodium sulphate solution was placed in a 1 litre flask.

25g of barium carbonate or a corresponding quantity of the test suspension containing barium carbonate was added to the flask with continuous stirring at a temperature of 25°C.

After precisely one hour, the stirring was stopped and the mixture was filtered.

The sodium carbonate obtained in the filtrate was quantified by acidimetric titration.

The quantity of sodium carbonate measured corresponded to the barium carbonate which had reacted with the sodium sulphate.

The reactivity was therefore the percentage of barium carbonate transformed into sodium carbonate in one hour.

Reactivity decreased with increases in the average particle size, as can be seen from Table 1 below.

Table 1

| Average particle size ($D_{50}$) | Reactivity (%) |
|---|---|
| 1.1 | 78 |
| 1.9 | 71 |
| 4 | 54 |
| 6.5 | 42 |
| 8.5 | 28 |

Example 2

2kg of barium carbonate in paste form with 20% moisture was supplied to the reactor used in Example 1, together with 100g of water containing 8g of Maredis 149 (polyacrylate) and was dispersed for 15 minutes.

A highly fluid dispersion was obtained, to which 1.4g of Kelzan was added slowly.

Dispersion continued for 30 minutes.

At the end of this period 20ml of 1% Soibac was added to the disperser.

The resulting suspension contained:

75% of barium carbonate
0.066% of xanthan gum
0.38% of polyacrylate
and had the following characteristics:

| | |
|---|---|
| viscosity | 500 cps |
| density | 2.16 |
| average particle size | 1.1 microns |
| reactivity | 80.5% |

Example 3

The suspension of Example 1 was micronized in a ball mill with glass balls, with agitation at 2800 revolutions/min for 10 minutes.

The resulting suspension still had a density of 2.16 and a viscosity of 665 cps. Its reactivity was 88% and the average size of the barium carbonate particles was 0.93 microns.

Example 4 - Comparative test

2kg of barium carbonate in paste form with 20% moisture was supplied to the reactor used in Example 1, in the same conditions, together with 110g of water containing 2g of Calgon (polymetaphosphate) and was dispersed for 15 minutes.

A fluid dispersion was obtained, to which 16g of Bentonite was added slowly.

Stirring continued for one hour.

The resulting suspension contained:

75.1% of barium carbonate
and had the following characteristics:

| viscosity | 700 cps |
| density | 2.16 |
| average particle size | 1.14 microns |
| reactivity | 75% |

Stability and redispersion test

The stability of suspensions 1, 2, 3 and 4 and their ability to be redispersed were evaluated by the following method:

a 50ml graduated sedimentation cylinder was filled with the suspension to be tested, the cylinder was plugged and was allowed to rest for 10 days.

After this time, the volume occupied by the sediment was read.

The cylinder was then kept plugged and turned upside down 5 times, the plug was removed and the cylinder was turned over again; a suspension which could be redispersed flowed out of the cylinder completely.

This test was carried out with suspensions 1, 2, 3 and 4 and gave the following results:

| Dispersion | Volume of sediment | Redispersion |
| --- | --- | --- |
| Example 1 | 49 ml / 50 ml | complete |
| Example 2 | 49 ml / 50 ml | complete |
| Example 3 | 49 ml / 50 ml | complete |
| Example 4 | 45 ml / 50 ml | insufficient |

The sediment formed in the suspension of Examples 1, 2 and 3 was spongy and bulky and could easily be redispersed by gentle agitation whereas the sediment of the suspension in Example 4 was dense, tending to become compacted, and could not be fully redispersed.

In other words, in the suspension of Examples 1, 2 and 3 there was no "caking" phenomenon, whereas the suspension of Example 4 showed clear signs of "caking".

**Claims**

1.  An aqueous suspension of barium carbonate for use in the production of building materials, comprising barium carbonate having a particle size varying from about 0.25 microns to about 1.5 microns and xanthan gum.

2.  A suspension according to Claim 1, in which there is a quantity of from 35% to 85% by weight of barium carbonate relative to the total weight of the suspension.

3.  A suspension according to Claim 2, in which there is a quantity of from 70% to 80% by weight of barium carbonate.

4.  A suspension according to any one of the preceding claims in which there is a quantity of from 0.01% to 1% by weight of xanthan gum.

5.  A suspension according to Claim 4 in which there is a quantity of from 0.01% by weight to 0.2% by weight of xanthan gum.

6.  A suspension according to any one of the preceding claims, also comprising at least one dispersant.

7.  A suspension according to Claim 6, in which the at least one dispersant is selected from the group comprising polyacrylate-based polymers and copolymers having molecular weights of from 1,000 to 1,000,000, polymeric derivatives of melamine-formaldehyde-bisulphite, and polynaphthalenesulphonate.

8.  A suspension according to Claim 6, in which the dispersant is polynaphthalenesulphonate.

9.  A suspension according to any one of the preceding claims, comprising 75% by weight of barium carbonate, 0.06% by weight of xanthan gum and 0.5% by weight of at least one dispersant.

10. A method of producing a suspension according to any one of the preceding claims, which comprises the steps of:

-   reacting an aqueous solution of a soluble barium salt with carbon dioxide or an alkaline carbonate,

-   subjecting the final reaction mixture to filtration to give a barium carbonate paste,

-   mixing the paste with at least one dispersant, xanthan gum, and possibly water to give a suspension, characterized in that it comprises a further step of reducing the size of the barium carbonate particles by subjecting said suspension to the action of a ball mill.

11. Use of xanthan gum as a protective colloid for aqueous barium carbonate suspensions.

European Patent
Office

**EUROPEAN SEARCH REPORT**

Application Number

EP 97 83 0170

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 4 732 748 A (STEWART ROBERT D ET AL) 22 March 1988 * column 4, line 36 - line 56; claims * | 1-9,11 | C01F11/18 C04B22/10 |
| D,Y | US 3 322 683 A (LESTER) * the whole document * | 1-9,11 | |
| A | EP 0 368 507 A (ENGELHARD CORP) 16 May 1990 * page 8, line 21 - line 31; claims * | 1-11 | |
| A | EP 0 242 244 A (UNIV BORDEAUX) 21 October 1987 * the whole document * | 1-11 | |
| A | EP 0 412 027 A (COATEX SA) 6 February 1991 * claim 20 * | 10 | |
| A | US 3 421 843 A (CONAWAY WILLIAM A ET AL) 14 January 1969 * the whole document * | 10 | TECHNICAL FIELDS SEARCHED (Int.Cl.6) C01F C04B |

The present search report has been drawn up for all claims

| Place of search | Date of completion of the search | Examiner |
|---|---|---|
| THE HAGUE | 24 September 1997 | Zalm, W |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)